# EUROPÄISCHE PATENTSCHRIFT

(11) **EP 1 469 231 B1**
(45) Veröffentlichungstag und Bekanntmachung des Hinweises auf die Patenterteilung: **29.11.2006**
(21) Anmeldenummer: 04008521.9
(22) Anmeldetag: 08.04.2004
(51) Int. Cl.: F16H 45/02

(54) **Drehmomentwandler**
Torque converter
Convertisseur de couple

(30) Priorität: 17.04.2003 DE 10317634
(43) Veröffentlichungstag der Anmeldung: 20.10.2004
(73) Patentinhaber: ZF Sachs AG, 97424 Schweinfurt (DE)
(72) Erfinder: Schmid, Herbert, 97702 Münnerstadt (DE); Johann, Herbert, 97078 Würzburg (DE)

(56) Entgegenhaltungen:
- EP-A- 0 732 527
- DE-A1- 4 333 562
- DE-A1- 19 920 542
- DE-C1- 19 724 973

## Beschreibung

Die vorliegende Erfindung betrifft einen Drehmomentwandler mit einem Pumpenrad, einem Turbinenrad und einem Leitrad zur Bildung eines hydrodynamischen Kreises sowie mit einem Torsionsschwingungsdämpfer mit einem Primär- und einem Sekundärdämpferelement, die über mindestens einen Federsatz drehelastisch miteinander gekoppelt sind,
- wobei das Turbinenrad über eine Turbinenradschale verfügt und bezüglich einer Turbinenradnabe in einer axial und radial wirksamen ersten Lagerung drehbar gelagert ist,
- wobei das Sekundärdämpferelement drehfest auf der Turbinenradnabe angeordnet ist und das Turbinenrad auf das Primärdämpferelement einwirkt,
- wobei das Leitrad auf einer Leitradnabe angeordnet ist, die sich über eine axial wirksame zweite Lagerung an einem mit der Turbinenradschale verbundenen Turbinenradfuß abstützt.

Ein derartiger Drehmomentwandler ist beispielsweise aus der DE 197 24 973 C1 bekannt. Bei diesem Drehmomentwandler ist der Turbinenradfuß sehr kompliziert ausgestaltet. Insbesondere weist er eine Axialerstreckung auf, die eine Ausnehmung im Sekundärdämpferteil durchgreift, um so eine Drehwinkelbegrenzung zu realisieren. Der Turbinenradfuß des bekannten Drehmomentwandlers ist daher fertigungstechnisch nur umständlich herstellbar. Darüber hinaus weist er eine große Masse auf. Auf Grund der großen Masse ist insbesondere auch eine etwaige Schweißverbindung mit der Turbinenradschale - wenn überhaupt - nur schwer zu realisieren. Schließlich wird das Drehmoment von der Turbinenradschale über den Turbinenradfuß - also weit radial innen - auf das Primärdämpferteil übertragen, so dass die Verbindung der Turbinenradschale mit dem Turbinenradfuß sehr stabil ausgebildet sein muss. Die EP 732 527 A zeigt die Merkmale des Oberbegriffs des Anspruches 1.

Die Aufgabe der vorliegenden Erfindung besteht darin, einen gattungsgemäßen Drehmomentwandler derart weiter zu entwickeln, dass er einfacher aufgebaut ist und fertigungstechnisch leichter herstellbar ist. Insbesondere soll der Turbinenradfuß einfacher und leichter ausbildbar sein.

Die Aufgabe wird dadurch gelöst, dass die erste Lagerung radial außerhalb der zweiten Lagerung angeordnet ist und dass das Turbinenrad über ein Zwischenelement auf das Primärdämpferelement einwirkt.

Wenn das Zwischenelement, die Turbinenradschale und der Turbinenradfuß über gemeinsame Verbindungselemente miteinander verbunden sind, ist der Drehmomentwandler konstruktiv einfacher ausgebildet. Die Verbindungselemente sind dabei vorzugsweise als Niete ausgebildet.

Wenn das Zwischenelement sich an die Turbinenradschale anschmiegt, baut der Drehmomentwandler noch kompakter. Dies gilt ganz besonders, wenn das Zwischenelement in einem Bereich angeordnet ist, der weiter radial innen liegt als ein Turbinenradschalenbereich, in dem die Turbinenradschale ihre größte axiale Erstreckung aufweist.

Wenn das Zwischenelement mit dem Primärdämpferelement verzahnt ist, ergibt sich eine konstruktiv einfache und zuverlässige Verbindung zwischen dem Zwischenelement und dem Primärdämpferelement.

Wenn eine Überbrückungskupplung vorgesehen ist, die mit dem Primärdämpferelement in Wirkverbindung steht, sind Wandlerverluste minimierbar bzw. eliminierbar. Die Überbrückungskupplung kann dabei zum Übertragen großer Momente mehrere axial hintereinander angeordnete Kupplungslamellen aufweisen.

Wenn das Primärdämpferelement in einem Eingriffbereich mit dem Sekundärdämpferelement eine Drehwinkelbegrenzung bildet, die maximal auf der gleichen radialen Höhe angeordnet ist wie die erste Lagerung, baut der Drehmomentwandler noch kompakter. Die Drehwinkelbegrenzung kann dabei z. B. als mit Spiel in Umfangsrichtung versehene Verzahnung zwischen Primär- und Sekundärdämpferelement ausgebildet sein.

Um die erste Lagerung relativ weit radial außen anordnen zu können, weist die Turbinenradnabe vorzugsweise einen Radialsteg auf, an dessen radial äußerem Ende ein Flansch angeordnet ist, an dem wiederum die erste Lagerung radial außen angeordnet ist.

Der axial benötigte Bauraum kann noch weiter verringert werden, wenn der Turbinenradfuß sich von der Turbinenradschale nach radial innen erstreckt, der Turbinenradfuß unterhalb des Flansches eine Abbiegung aufweist, so dass er in seinem radial inneren Abschnitt unter dem Flansch verläuft, und die zweite Lagerung am radial inneren Ende des Turbinenradfußes angeordnet ist.

Die erste Lagerung ist vorzugsweise als Gleitlagerung mit L-förmigem Querschnitt ausgebildet. Die zweite Lagerung ist vorzugsweise als Wälzlager, insbesondere als Kugellager, ausgebildet.

Weitere Vorteile und Einzelheiten ergeben sich aus der nachfolgenden Beschreibung eines Ausführungsbeispiels. Dabei zeigt die einzige

Figur einen Teilschnitt durch einen Drehmomentwandler.

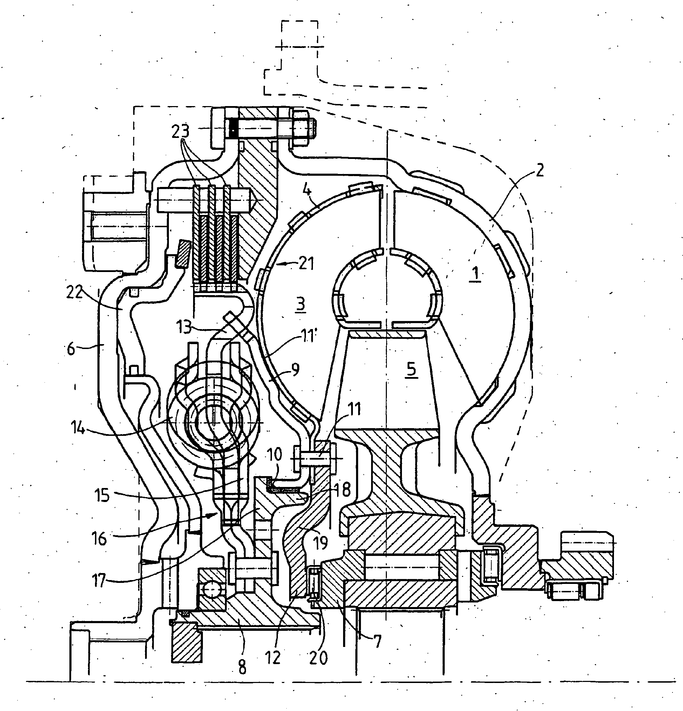

Gemäß Figur 1 weist ein Drehmomentwandler ein Pumpenrad 1 mit einer Pumpenradschale 2 und ein Turbinenrad 3 mit einer Turbinenradschale 4 auf. Zwischen dem Pumpenrad 1 und dem Turbinenrad 3 ist ein Leitrad 5 angeordnet. Das Pumpenrad 1, das Turbinenrad 3 und das Leitrad 5 bilden einen hydraulischen Kreis.

Die Pumpenradschale 2 ist, wie allgemein bekannt, mit einem Wandlergehäuse 6 drehfest verbunden. Das Wandlergehäuse 6 wiederum ist mit einer Kurbelwelle einer nicht dargestellten Verbrennungskraftmaschine drehfest verbunden. Das Leitrad 5 ist auf einer Leitradnabe 7 gelagert.

Das Turbinenrad 3 ist vom Pumpenrad 1 antreibbar. Das Turbinenrad 3 ist bezüglich einer Turbinenradnabe 8 über ein Zwischenelement 9 in einer axial und radial wirksamen ersten Lagerung 10 gelagert, so dass die Turbinenradschale 4 bezüglich der Turbinenradnabe 8 drehbar gelagert ist. Die erste Lagerung 10 ist dabei vorliegend als Gleitlagerung mit L-förmigem Querschnitt ausgebildet. Sie bewirkt auf Grund ihrer Anordnung in unmittelbarer Nähe der Turbinenradschale 4 insbesondere auch eine stabile Aufnahme des Turbinenrades 3.

Das Zwischenelement 9 ist in fertigungstechnisch einfach zu handhabender Weise relativ weit radial außen mit der Turbinenradschale 4 über Verbindungselemente 11 drehfest verbunden. Somit ist ohne weiteres ein hohes Drehmoment übertragbar. Die Verbindungselemente 11 sind dabei gemäß der Figur z. B. als Niete 11 ausgebildet. Ergänzend kann eine direkte Verschweißung 11' des Zwischenelements 9 und der Turbinenradschale 4 vorgesehen sein. Dies ist insbesondere deshalb möglich weil das Zwischenelement 9 zwar dicker als die Turbinenradschale 4, aber maximal zweimal so dick ist.

Im vorliegenden Fall sind über die Verbindungselemente 11 nicht nur die Turbinenradschale 4 und das Zwischenelement 9 miteinander verbunden, sondern auch ein Turbinenradfuß 12, auf den nachstehend noch näher eingegangen wird. Somit ist auch dessen Verbindung mit der Turbinenradschale 4 einfach zu bewerkstelligen.

Das Zwischenelement 9 ist gemäß der Figur in einem Bereich angeordnet, der weiter radial innen liegt als ein Turbinenradschalenbereich, in dem die Turbinenradschale 4 ihre größte axiale Erstreckung aufweist. Es schmiegt sich ersichtlich an die Turbinenradschale 4 an.

Das Zwischenelement 9 greift mit seinem radial äußerem Ende in ein Primärdämpferelement 13 ein. Insbesondere kann das Zwischenelement 9 mit dem Primärdämpferelement 13 dabei verzahnt sein. Über das Zwischenelement 9 kann somit auch das Turbinenrad 3 auf das Primärdämpferelement 13 einwirken.

Das Primärdämpferelement 13 ist über mindestens einen Federsatz 14 mit einem Sekundärdämpferelement 15 drehelastisch gekoppelt. Das Primärdämpferelement 13, der Federsatz 14 und das Sekundärdämpferelement 15 bilden zusammen einen Torsionsschwingungsdämpfer. Das Primärdämpferelement 13 bildet in einem Eingriffbereich 16 mit dem Sekundärdämpferelement 15 eine Drehwinkelbegrenzung, die im vorliegenden Fall als mit Spiel in Umfangsrichtung versehene Verzahnung zwischen Primär- und Sekundärdämpferelement 13, 15 ausgebildet ist. Ein axiales Durchgreifen des Sekundärdämpferelements 15 ist nicht erforderlich. Das Sekundärdämpferelement 15 ist drehfest auf der Turbinenradnabe 8 angeordnet. Der Eingriffbereich 16 ist dabei weiter radial innen angeordnet als der Federsatz 14. Er ist auch maximal auf der gleichen radialen Höhe angeordnet wie die Gleitlagerung 10. Vorzugsweise ist er weiter radial innen angeordnet.

Die Turbinenradnabe 8 weist einen Radialsteg 17 auf. Am radial äußeren Ende des Radialstegs 17 ist ein Flansch 18 angeordnet. Die Gleitlagerung 10 ist radial außen am Flansch 18 angeordnet.

Der Turbinenradfuß 12 erstreckt sich frei tragend von der Turbinenradschale 4 nach radial innen. Diese frei tragende Ausbildung wird insbesondere durch die Anordnung der ersten Lagerung 10 zwischen der Turbinenradnabe 8 und dem Zwischenelement 9 ermöglicht. Er weist unterhalb des Flansches 18 eine Abbiegung 19 auf. Dadurch verläuft er in seinem radial inneren Abschnitt unter dem Flansch 18.

Am radial inneren Ende des Turbinenradfußes 12, also weiter radial innen als die Gleitlagerung 10, ist eine axial wirksame zweite Lagerung 20 angeordnet. Diese ist im vorliegenden Fall als Wälzlager 20, nämlich als Kugellager 20, ausgebildet. Über das Wälzlager 20 stützt sich die Leitradnabe 7 axial am Turbinenradfuß 12 ab. Das Wälzlager 20 weist Durchlässe für das Wandlerfluid auf. Derartige Durchlässe sind allgemein üblich und bekannt, siehe z. B. die DE 197 52 187 A1. Von einer Darstellung der Durchlässe in der Figur wurde daher abgesehen.

Bei dem erfindungsgemäßen Drehmomentwandler ist ferner eine Überbrückungskupplung 21 vorgesehen. Die Überbrückungskupplung 21 steht mit dem Primärdämpferelement 13 in Wirkverbindung. Die Überbrückungskupplung 21 ist mittels eines Betätigungskolbens 22 öffen- und schließbar. Sie weist gemäß der Figur mehrere axial hintereinander angeordnete Kupplungslamellen 23 auf. Dadurch sind mittels der Überbrückungskupplung 21 hohe Drehmomente übertragbar.

### Bezugszeichenliste

- 1: Pumpenrad
- 2: Pumpenradschale
- 3: Turbinenrad
- 4: Turbinenradschale
- 5: Leitrad
- 6: Wandlergehäuse
- 7: Leitradnabe
- 8: Turbinenradnabe
- 9: Zwischenelement
- 10: Gleitlagerung
- 11: Verbindungselemente/Niete
- 11': Verschweißung
- 12: Turbinenradfuß
- 13: Primärelement
- 14: Federsatz
- 15: Sekundärelement
- 16: Eingriffbereich
- 17: Radialsteg
- 18: Flansch
- 19: Abbiegung
- 20: Wälzlager
- 21: Überbrückungskupplung
- 22: Betätigungskolben
- 23: Kupplungslamellen

## Patentansprüche

1. Drehmomentwandler mit einem Pumpenrad (1), einem Turbinenrad (3) und einem Leitrad (5) zur Bildung eines hydrodynamischen Kreises sowie mit einem Torsionsschwingungsdämpfer (13 - 15) mit einem Primär- und einem Sekundärdämpferelement (13, 15), die über mindestens einen Federsatz (14) drehelastisch miteinander gekoppelt sind,
- wobei das Turbinenrad (3) über eine Turbinenradschale (4) verfügt und bezüglich einer Turbinenradnabe (8) in einer axial und radial wirksamen ersten Lagerung (10) drehbar gelagert ist,
- wobei das Sekundärdämpferelement (15) drehfest auf der Turbinenradnabe (8) angeordnet ist und das Turbinenrad (3) auf das Primärdämpferelement (13) einwirkt,
- wobei das Leitrad (5) auf einer Leitradnabe (7) angeordnet ist, die sich über eine axial wirksame zweite Lagerung (20) an einem mit der Turbinenradschale (4) verbundenen Turbinenradfuß (12) abstützt,
wobei das Turbinenrad (3) über ein Zwischenelement (9) auf das Primärdämpferelement (13) einwirkt,
**dadurch gekennzeichnet,**
**dass** die erste Lagerung (10) radial außerhalb der zweiten Lagerung (20) angeordnet ist.

2. Drehmomentwandler nach Anspruch 1,
**dadurch gekennzeichnet,**
**dass** das Zwischenelement (9), die Turbinenradschale (4) und der Turbinenradfuß (12) über gemeinsame Verbindungselemente (11) miteinander verbunden sind.

3. Drehmomentwandler nach Anspruch 2,
**dadurch gekennzeichnet,**
**dass** die Verbindungselemente (11) als Niete (11) ausgebildet sind.

4. Drehmomentwandler nach Anspruch 1, 2 oder 3,
**dadurch gekennzeichnet,**
**dass** das Zwischenelement (9) sich an die Turbinenradschale (4) anschmiegt.

5. Drehmomentwandler nach einem der Ansprüche 1 bis 4,
**dadurch gekennzeichnet,**
**dass** das Zwischenelement (9) in einem Bereich angeordnet ist, der weiter radial innen liegt als ein Turbinenradschalenbereich, in dem die Turbinenradschale (4) ihre größte axiale Erstreckung aufweist.

6. Drehmomentwandler nach einem der Ansprüche 1 bis 5,
**dadurch gekennzeichnet,**
**dass** das Zwischenelement (9) mit dem Primärdämpferelement (13) verzahnt ist.

7. Drehmomentwandler nach einem der obigen Ansprüche,
**dadurch gekennzeichnet,**
**dass** eine Überbrückungskupplung (21) vorgesehen ist, die mit dem Primärdämpferelement (13) in Wirkverbindung steht.

8. Drehmomentwandler nach Anspruch 7,
**dadurch gekennzeichnet,**
**dass** die Überbrückungskupplung (21) mehrere axial hintereinander angeordnete Kupplungslamellen (23) aufweist.

9. Drehmomentwandler nach einem der obigen Ansprüche,
**dadurch gekennzeichnet,**
**dass** das Primärdämpferelement (13) in einem Eingriffbereich (16) mit dem Sekundärdämpferelement (15) eine Drehwinkelbegrenzung bildet, die maximal auf der gleichen radialen Höhe angeordnet ist wie die erste Lagerung (10).

10. Drehmomentwandler nach Anspruch 9,
**dadurch gekennzeichnet,**
**dass** die Drehwinkelbegrenzung als mit Spiel in Umfangsrichtung versehene Verzahnung zwischen Primärdämpferelement (13) und Sekundärdämpferelement (15) ausgebildet ist.

11. Drehmomentwandler nach einem der obigen Ansprüche,
**dadurch gekennzeichnet,**
**dass** die Turbinenradnabe (8) einen Radialsteg (17) aufweist, an dessen radial äußerem Ende ein Flansch (18) angeordnet ist, und dass die erste Lagerung (10) radial außen am Flansch (18) angeordnet ist.

12. Drehmomentwandler nach Anspruch 11,
**dadurch gekennzeichnet,**
**dass** der Turbinenradfuß (12) sich von der Turbinenradschale (4) nach radial innen erstreckt und unterhalb des Flansches (18) eine Abbiegung (19) aufweist, so dass er in seinem radial inneren Abschnitt unter dem Flansch (18) verläuft, und dass die zweite Lagerung (20) am radial inneren Ende des Turbinenradfußes (12) angeordnet ist.

13. Drehmomentwandler nach einem der obigen Ansprüche,
**dadurch gekennzeichnet,**
**dass** die erste Lagerung (10) als Gleitlagerung (10) mit L-förmigem Querschnitt ausgebildet ist.

14. Drehmomentwandler nach einem der obigen Ansprüche,
**dadurch gekennzeichnet,**
**dass** die zweite Lagerung (20) als wälzlager (20), insbesondere als Kugellager (20) ausgebildet ist.

## Claims

1. Torque converter having a pump impeller (1), a turbine rotor (3) and a stator (5) for forming a hydrodynamic circuit together with a torsional vibration damper (13-15) having a primary damping element (13) and a secondary damping element (15), which torsionally are flexibly coupled to one another by at least one spring assembly (14),
- the turbine rotor (3) having a turbine rotor shell (4) and being supported in an axially and radially acting first bearing (10) so that it can rotate relative to a turbine rotor hub (8),
- the secondary damping element (15) being arranged rotationally fixed on the turbine rotor hub (8) and the turbine rotor (3) acting on the primary damping element (13),
- the stator (5) being arranged on a stator hub (7), which is supported by way of an axially acting second bearing (20) on a turbine rotor base (12) connected to the turbine rotor shell (4),
- the turbine rotor (3) acting on the primary damping element (13) by way of an intermediate element (9),
**characterized in that** the first bearing (10) is arranged radially outside the second bearing (20).

2. Torque converter according to Claim 1, **characterized in that** the intermediate element (9), the turbine rotor shell (4) and the turbine rotor base (12) are connected to one another by common connecting elements (11).

3. Torque converter according to Claim 2, **characterized in that** the connecting elements (11) take the form of rivets (11).

4. Torque converter according to Claim 1, 2 or 3, **characterized in that** the intermediate element (9) rests against the turbine rotor shell (4).

5. Torque converter according to any one of Claims 1 to 4, **characterized in that** the intermediate element (9) is arranged in an area situated radially inwards of a turbine rotor shell area, in which the axial extent of the turbine rotor shell (4) is at its greatest.

6. Torque converter according to any one of Claims 1 to 5, **characterized in that** the intermediate element (9) is in meshing toothed engagement with the primary damping element (13).

7. Torque converter according to any one of the preceding Claims, **characterized in that** a converter lockup clutch (21) is provided, which is operatively connected to the primary damping element (13).

8. Torque converter according to Claim 7, **characterized in that** the converter lockup clutch (21) has multiple clutch discs (23) arranged axially in series.

9. Torque converter according to any one of the preceding claims, **characterized in that** in one engagement area (16) the primary damping element (13) forms a rotational angle limiter with the secondary damping element (15), said limiter at maximum being located at the same radial height as the first bearing (10).

10. Torque converter according to Claim 9, **characterized in that** the rotational angle limiter takes the form of a meshing toothed engagement between the primary damping element (13) and the secondary damping element (15) endowed with circumferential play.

11. Torque converter according to any one of the preceding claims, **characterized in that** the turbine rotor hub (8) has a radial web (17), at the radially outer end of which a flange (18) is arranged, and that the first bearing (10) is arranged radially outside on the flange (18).

12. Torque converter according to Claim 11, **characterized in that** the turbine rotor base (12) extends radially inwards from the turbine rotor shell (4) and below the flange (18) has a bent section (19), so that in its radially inner section it runs beneath the flange (18), and the second bearing (20) is arranged at the radially inner end of the turbine rotor base (12).

13. Torque converter according to any one of the preceding claims, **characterized in that** the first bearing (10) takes the form of a plain bearing (10) of L-shaped cross section.

14. Torque converter according to any one of the preceding claims, **characterized in that** the second bearing (20) takes the form of roller bearing (20), in particular a ball bearing (20).

## Revendications

1. Convertisseur de couple de rotation doté d'une roue de pompe (1), d'une roue de turbine (3) et d'une roue de guidage (5) qui forment un circuit hydrodynamique, ainsi que d'un amortisseur (13 - 15) de vibrations en torsion doté d'un élément primaire et d'un élément secondaire d'amortissement (13, 15) qui sont reliés l'un à l'autre à rotation élastique par au moins un ensemble de ressorts (14),
- dans lequel la roue de turbine (3) est dotée d'une coquille (4) de roue de turbine et est montée à rotation par rapport à un moyeu (8) de roue de turbine dans un premier palier (10) qui agit axialement et radialement,
- l'élément secondaire d'amortissement (15) étant disposé à rotation solidaire sur le moyeu (8) de la roue de turbine, la roue de turbine (3) agissant sur l'élément primaire d'amortissement (13),
- la roue de guidage (5) étant disposée sur un moyeu (7) de roue de guidage qui s'appuie sur un pied (12) de roue de turbine relié à la coquille (4) de roue de turbine par un deuxième palier (20) qui agit axialement,
- la roue de turbine (3) agissant sur l'élément primaire d'amortissement (13) par l'intermédiaire d'un élément intermédiaire (9),
**caractérisé en ce que**
le premier palier (10) est disposé radialement à l'extérieur du deuxième palier (20).

2. Convertisseur de couple de rotation selon la revendication 1, **caractérisé en ce que** l'élément intermédiaire (9), la coquille (4) de la roue de turbine et le pied (12) de la roue de turbine sont reliés les uns aux autres par des éléments de liaison (11) communs.

3. Convertisseur de couple de rotation selon la revendication 2, **caractérisé en ce que** les éléments de liaison (11) sont configurés comme rivets (11).

4. Convertisseur de couple de rotation selon les revendications 1, 2 ou 3, **caractérisé en ce que** l'élément intermédiaire (9) épouse la forme de la coquille (4) de la roue de turbine.

5. Convertisseur de couple de rotation selon l'une des revendications 1 à 4, **caractérisé en ce que** l'élément intermédiaire (9) est disposé dans une partie située plus loin radialement que la partie qui forme la coquille de la roue de turbine et sur laquelle la coquille (4) de la roue de la turbine présente sa plus grande extension axiale.

6. Convertisseur de couple de rotation selon l'une des revendications 1 à 5, **caractérisé en ce que** l'élément intermédiaire (9) s'engrène sur l'élément primaire d'amortissement (13).

7. Convertisseur de couple de rotation selon l'une des revendications précédentes, **caractérisé en ce qu'**un accouplement de pontage (21) qui coopère avec l'élément primaire d'amortissement (13) est prévu.

8. Convertisseur de couple de rotation selon la revendication 7, **caractérisé en ce que** l'accouplement de pontage (21) présente plusieurs lamelles d'accouplement (23) disposées les unes derrière les autres dans le sens axial.

9. Convertisseur de couple de rotation selon l'une des revendications précédentes, **caractérisé en ce que** dans une zone d'engagement (16) sur l'élément secondaire d'amortissement (15), l'élément primaire d'amortissement (13) forme pour l'angle de rotation une restriction qui est disposée au maximum à la même hauteur radiale que le premier palier (10).

10. Convertisseur de couple de rotation selon la revendication 9, **caractérisé en ce que** la restriction de l'angle de rotation est configurée comme denture dotée d'un jeu dans le sens périphérique entre l'élément primaire d'amortissement (13) et l'élément secondaire d'amortissement (15).

11. Convertisseur de couple de rotation selon l'une des revendications précédentes, **caractérisé en ce que** le moyeu (8) de la roue de turbine présente une aile radiale (17) à l'extrémité radialement extérieure de laquelle est disposée une bride (18) et **en ce que** le premier palier (10) est disposé radialement à l'extérieur sur la bride (18).

12. Convertisseur de couple de rotation selon la revendication 11, **caractérisé en ce que** le pied (12) de la roue de turbine s'étend radialement vers l'intérieur depuis la coquille (4) de la roue de turbine et présente un coude (19) en dessous de la bride (18), de telle sorte que sa partie située radialement à l'intérieur s'étend en dessous de la bride (18), et **en ce que** le deuxième palier (20) est disposé à l'extrémité du pied (12) de la roue de turbine situé radialement à l'intérieur.

13. Convertisseur de couple de rotation selon l'une des revendications précédentes, **caractérisé en ce que** le premier palier (10) est configuré comme palier coulissant (10) à section transversale en forme de L.

14. Convertisseur de couple de rotation selon l'une des revendications précédentes, **caractérisé en ce que** le deuxième palier (20) est configuré comme palier à roulement (20) et en particulier comme palier à billes (20).
